(19) Europäisches Patentamt
European Patent Office
Office européen des brevets

(11) **EP 3 771 284 A1**

(12) **EUROPEAN PATENT APPLICATION**

(43) Date of publication:
**27.01.2021   Bulletin 2021/04**

(51) Int Cl.:
***H04W 74/08*** *(2009.01)*

(21) Application number: **20178867.6**

(22) Date of filing: **09.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.07.2019   US 201962878102 P**
　　　　　　　　 **22.05.2020   US 202016882431**

(71) Applicant: **Samsung Electronics Co., Ltd.**
**Gyeonggi-do 16677 (KR)**

(72) Inventors:
- **ABOTABL, Ahmed A.**
  **San Diego, CA 92122 (US)**
- **BAE, Jung Hyun**
  **San Diego, CA 92130 (US)**
- **KARMOOSE, Mohammed**
  **San Diego, CA 92122 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **METHODS AND APPARATUS FOR MAPPING RANDOM ACCESS PREAMBLE GROUPS TO UPLINK CHANNEL CONFIGURATIONS**

(57)　　A method for random access in a wireless communication network may include selecting a first configuration or a second configuration for a physical uplink shared channel (PUSCH), selecting a preamble from a first preamble group corresponding to the first configuration or a second preamble group corresponding to the second configuration, transmitting the selected preamble from a user equipment (UE) through a physical random access channel (PRACH), and transmitting a payload from the UE through the PUSCH using the selected configuration, wherein the selected configuration and the selected preamble may be determined by the UE. The one or more preambles in the first and second preamble groups may be mapped to one or more sets of PUSCH resources in the first and second configurations, respectively, and the UE may transmit the payload using the set of PUSCH resources mapped to the selected preamble.

FIG. 1

**Description**

CROSS-REFERENCE TO RELATED APPLICATION

This application claims priority to, and the benefit of, U.S. Provisional Patent Application Ser. No. 62/878,102 Titled "System And Method For Providing Mapping Of Preamble Groups To Different Physical Uplink Shared Channel (PUSCH) Occasions" filed July 24, 2019 which is incorporated by reference.

TECHNICAL AREA

This disclosure relates generally to wireless networks, and specifically to methods and apparatus for implementing random access procedures involving preambles and channel configurations.

BACKGROUND

A wireless network may implement a random access procedure to enable a user equipment (UE) such as a cellular handset to establish a connection with a base station. For example, a random access procedure may enable the synchronization of an uplink between the UE and the base station.

SUMMARY

A method for random access in a wireless communication network may include selecting a first configuration or a second configuration for a first channel, selecting a preamble from a first preamble group corresponding to the first configuration or a second preamble group corresponding to the second configuration, transmitting the selected preamble from a user equipment (UE) through a second channel, and transmitting a payload from the UE through the first channel using the selected configuration, wherein the selected configuration and the selected preamble may be determined by the UE. The first channel may include a physical uplink shared channel (PUSCH), and the second channel may include a physical random access channel (PRACH). The one or more preambles in the first preamble group may be mapped to one or more sets of PUSCH resources in the first configuration, one or more preambles in the second preamble group may be mapped to one or more sets of PUSCH resources in the second configuration, and the UE may transmit the payload using the set of PUSCH resources mapped to the selected preamble. The UE may select the configuration based on one or more channel conditions. The UE may select the configuration based on a potential length of the payload. The payload may include contention resolution information. The preambles may be mapped to the sets of PUSCH resources on a one-to-one basis. The preambles may be mapped to the sets of PUSCH resources on a multiple-to-one basis. The first preamble group may be non-overlapping with the second preamble group. The method may further include receiving the selected preamble through the PRACH at a base station, determining the selected configuration for the PUSCH based on the selected preamble at the base station, and receiving the payload through the PUSCH at the base station using the selected configuration. The method may further include receiving the selected preamble through the PRACH at a base station, determining the set of PUSCH resources mapped to the selected preamble at the base station, and receiving the payload through the PUSCH at the base station using the set of PUSCH resources mapped to the selected preamble.

A user equipment (UE) for a wireless communication network may include a controller configured to: select a first configuration or a second configuration for a first channel, select a random access preamble from a first preamble group corresponding to the first configuration or a second preamble group corresponding to the second configuration, transmit the selected preamble from the UE through a second channel, and transmit a payload from the UE through the first channel using the selected configuration, wherein the selected configuration and the selected preamble may be determined by the controller. The first channel may include a physical uplink shared channel (PUSCH), and the second channel may include a physical random access channel (PRACH). One or more preambles in the first preamble group may be mapped to one or more sets of PUSCH resources in the first configuration, one or more preambles in the second preamble group may be mapped to one or more sets of PUSCH resources in the second configuration, and the controller may be configured to transmit the payload using the set of PUSCH resources mapped to the selected preamble. The controller may be configured to select the configuration based on at least one of a channel condition or a potential length of the payload. The preambles may be mapped to the sets of PUSCH resources on a one-to-one basis. The preambles may be mapped to the sets of PUSCH resources on a multiple-to-one basis. The UE may further include a transceiver coupled to the controller.

A base station for a wireless communication network may include a controller configured to: receive a random access preamble from a user equipment (UE) through a first channel (PRACH), determine a configuration for a second channel selected by the UE based on a preamble group to which the random access preamble belongs, and receive a random access payload through the second channel using the determined configuration. The first channel may include a physical random access channel (PRACH), and the second channel may include a physical uplink shared channel (PUSCH). The controller may be configured to determine a set of PUSCH resources mapped to the random access preamble, and receive the random access payload through the PUSCH at the base station using the determined set of PUSCH resources. The controller may be configured to transmit a random access response to the UE in response to the random access preamble and the random access payload. The base station may further include a transceiver coupled to the controller.

A method for random access in a wireless communication network may include transmitting, from a user equipment (UE), a selected preamble through a physical random access channel (PRACH), and transmitting, from the UE, a payload through a physical uplink shared channel (PUSCH) using a selected set of PUSCH resources, wherein: the selected set of PUSCH resources may be selected by the UE from one of two or more configurations for the PUSCH, the selected preamble may be selected by the UE from one of two or more groups of preambles, a first one of the groups of preambles corresponds to a first one of the configurations, a second one of the groups of preambles corresponds to a second one of the configurations, one or more preambles in the first one of the groups of preambles may be mapped to one or more corresponding sets of PUSCH resources in the first one of the configurations, and one or more preambles in the second one of the groups of preambles may be mapped to one or more corresponding sets of PUSCH resources in the second one of the configurations.

A method for random access in a wireless communication network may include selecting one of two or more configurations for a physical uplink shared channel (PUSCH), selecting a preamble from one of two or more preamble groups mapped to corresponding ones of the two or more configurations, transmitting the selected preamble from a user equipment (UE) through a physical random access channel (PRACH), and transmitting a payload from the UE through the PUSCH using the selected configuration, wherein the selected configuration and the selected preamble may be determined by the UE. Each configuration may include one or more sets of PUSCH resources, each preamble may be mapped to a set of PUSCH resources in the corresponding configuration, and the UE may transmit the payload using the set of PUSCH resources corresponding to the selected preamble.

A method for random access in a wireless communication network may include selecting a configuration for a physical uplink shared channel (PUSCH), selecting a preamble from a preamble group corresponding to the configuration, transmitting the selected preamble from a user equipment (UE) through a physical random access channel (PRACH), and transmitting a payload from the UE through the PUSCH using the configuration, wherein the UE may select the configuration from one of two or more configurations for the PUSCH, and the UE may select the preamble from one of two or more preamble groups corresponding to the two or more configurations.

BRIEF DESCRIPTION OF THE DRAWINGS

The figures are not necessarily drawn to scale and elements of similar structures or functions are generally represented by like reference numerals for illustrative purposes throughout the figures. The figures are only intended to facilitate the description of the various embodiments described herein. The figures do not describe every aspect of the teachings disclosed herein and do not limit the scope of the claims. To prevent the drawing from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.

Fig. 1 illustrates an example embodiment of a 4-step random access procedure for a wireless network according to this disclosure.

Fig. 2 illustrates an example embodiment of a 2-step random access procedure for a wireless network according to this disclosure.

Fig. 3 illustrates an example embodiment of some PUSCH configurations and resource sets according to this disclosure.

Fig. 4 illustrates an example embodiment of a preamble pool divided into two groups according to this disclosure.

Fig. 5 illustrates an example embodiment of a method for selecting preamble and a set of PUSCH resources for a PUSCH transmission in a 2-step random access procedure according to this disclosure.

Fig. 6 illustrates an example embodiment of a UE according to this disclosure.

Fig. 7 illustrates an example embodiment of a base station according to this disclosure.

DETAILED DESCRIPTION

In some embodiments according to this disclosure, a 4-step random access procedure may involve four message transmissions. The procedure may be initiated when a user equipment (UE) transmits a first message including a preamble to a base station. The base station may respond to the first message by transmitting a second message including a grant of uplink resources to the UE. The UE may then use the uplink resources to transmit a third message including a data payload to the base station. The data payload may include, for example, a contention resolution sequence. The base station may then respond by sending a fourth message including, for example, a contention resolution response, to the UE. The use of four messages (i.e., two round-trip cycles between the UE and the base station) in a 4-step random access procedure may result in relatively high latency and/or control-signaling overhead.

In some embodiments according to this disclosure, performance may be improved by using a 2-step random access procedure. A 2-step random access procedure may be initiated, for example, when a UE transmits a first message to a base station which may include both a preamble and a data payload. The data payload may include, for example, a contention resolution sequence. The base station may then respond by sending a second message to the UE with, for example, a contention resolution response. However, since the base station may not have granted uplink resources to the UE, the base station may not be able to receive and/or decode the data payload in the first message.

In some embodiments of a disclosed 2-step random access procedure, one or more components of a message from a UE may be mapped to one or more channel configurations and/or resources that may enable the base station to receive and/or decode a data payload in a first message from a UE during a random access procedure without sending a resource grant to the UE.

For example, in some embodiments, preambles may be divided into groups, and each group may be mapped to a pre-determined uplink channel configuration that may be used for the data payload portion of the first message. Thus, by determining which group the preamble is in, the base station may be able to determine which channel configuration to use for receiving and/or decoding the data payload in the first message from the UE.

Additionally, or alternatively, specific preambles (and/or subgroups of preambles) may be mapped to pre-determined sets of uplink channel resources which may be used to transmit the payload portion of the first message. Thus, a base station may determine which set of channel resources to use for receiving and/or decoding the data payload by detecting the specific preamble.

In some embodiments, some or all of the sets of channel resources may be associated with specific channel configurations. For example, each set of channel resources mapped to preambles in a preamble group may be associated with a channel configuration that is mapped to the preamble group. Thus, in some embodiments, there may be a first level of mapping, e.g., between preamble groups and channel configurations, and a second level of mapping, e.g., between specific preambles (and/or subgroups of preambles) and sets of channel resources.

Some example embodiments of systems, processes, methods, and/or the like illustrating some possible implementation details according to this disclosure are described below. These examples are provided for purposes of illustrating the principles of this disclosure, but the principles are not limited to these embodiments, implementation details, and/or the like. For example, some embodiments may be described in the context of 5G or new radio (NR) wireless networks, but the principles may also be applied in the context of 3G, 4G or future generations of wireless networks, or any other networks with random access procedures.

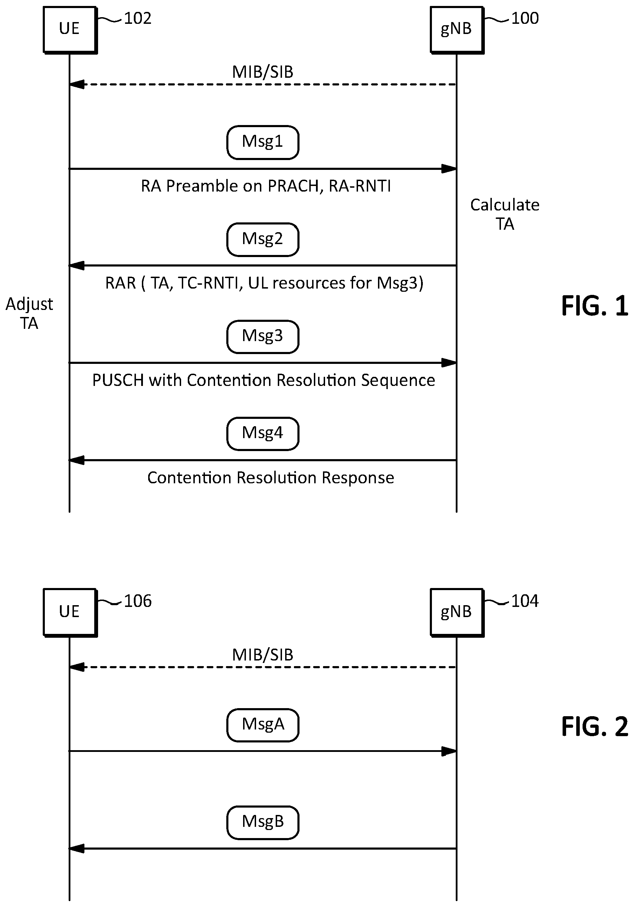

Fig. 1 illustrates an example embodiment of a 4-step random access (RA) procedure for a wireless network according to this disclosure. Prior to the start of an RA procedure, a base station 100, which in this embodiment may be implemented as a next generation node B (gNB), may broadcast a master information block (MIB) and one or more system information blocks (SIBs) to any UEs within range such as UE 102. The MIB/SIB transmission(s) may include fundamental system information that a UE may use to communicate over the wireless network including information about the configuration of the RA procedure.

A random access message exchange may be initiated by the UE 102 when it transmits a first message (Msg1) including a random access preamble to the gNB 100 over a physical random access channel (PRACH) which may be configured by the system information in the MIB/SIB. This may involve the use of a random access radio network temporary identifier (RA-RNTI) to identify the time-frequency resource used by the UE to transmit the random access preamble. The UE 102 may select the preamble from two groups of preambles, Group A and Group B, which may be pre-configured by the network to indicate different sizes of a third message (Msg3) the UE 102 may transmit later through a physical uplink shared channel (PUSCH) as described below. For example, the UE 102 may select and transmit a preamble from Group A if Msg3 will be below a certain pre-determined size, but may otherwise select and transmit a preamble from Group B.

After receiving Msg1, the gNB 100 may use the random access preamble to allocate resources for the UE 102 to use to transmit Msg3 to the gNB 100 through the PUSCH. The division of preambles into groups may enable the gNB 100 to know how much information the UE 102 may send in Msg3. The gNB 100 may also use the random access preamble to calculate a timing advance (TA) that may be used by the UE 102 to adjust its uplink timing.

The gNB 100 may then transmit a second message (Msg2) back to the UE 102. Msg2 may be a random access response (RAR) which may include the calculated TA, a grant of uplink (UL) resources such as PUSCH time/frequency resources that the UE 102 may use to transmit Msg3, and/or a Temporary C radio network temporary identifier (TC-RNTI) which may be used by the UE 102 for the rest of the RA procedure.

After receiving Msg2, the UE 102 may use the calculated TA to adjust its uplink timing. The UE 102 may then transmit Msg3 to the gNB 100 using the PUSCH resources allocated by the uplink grant received in Msg2. Thus, in some embodiments, the PUSCH transmission of Msg3 may be dynamically scheduled by the gNB 100 based on the grant of uplink resources. The data payload in Msg3 may contain, for example, a contention resolution sequence.

After receiving Msg3, the gNB 100 may then respond by sending a fourth message (Msg4) to the UE 102. Msg4 may include, for example, the same contention resolution sequence sent by the UE 102. After receiving Msg4, the UE 102 may confirm that the contention resolution sequence sent by the gNB 100 is the same sequence it sent in Msg3. If the sequences match, the UE 102 may consider itself connected and promote the temporary identifier TC-RNTI to the dedicated UE identifier C-RNTI.

Fig. 2 illustrates an example embodiment of a 2-step RA procedure for a wireless network according to this disclosure. Prior to the start of the RA procedure, a base station 104, which in this embodiment may be implemented as a next generation node B (gNB), may broadcast an MIB and one or more SIBs to any UEs within range such as UE 106. The MIB/SIB transmission(s) may include fundamental system information that the UE 106 may use to communicate over the wireless network including information about the configuration of the RA procedure. In some embodiments, the system information provided to the UE 106 may be different from that provided to the UE 102 in Fig. 1, for example, to accommodate different pre-determined configurations, sets of resources, and/or the like, that may be used for a 2-step RA procedure.

In some embodiments, a 2-step RA procedure may begin with the UE 106 making one or more decisions to select a preamble, a PUSCH configuration, and/or a set of PUSCH resources to use for transmitting a payload portion of a first message (MsgA) as described in more detail below.

In some embodiments, a random access message exchange may be initiated by the UE 106 when it transmits MsgA, which may include two or more parts. In a first part of MsgA, the UE 106 may transmit a selected random access preamble to the gNB 104 over a PRACH which may be configured, for example, by the system information in the MIB/SIB. This may be referred to as a MsgA PRACH transmission. In a second part of MsgA, the UE 106 may transmit a data payload using a selected set of PUSCH resources as describe in more detail below. This may be referred to as a MsgA PUSCH transmission. Thus, a MsgA transmission may be implemented with two or more separate transmissions, for example, one for MsgA PRACH and one for MsgA PUSCH.

To enable the gNB 104 to decode the MsgA PUSCH transmission, the gNB 104 may determine the set of PUSCH resources selected and used by the UE 106, for example, based on a mapping between the preamble and the selected set of PUSCH resources as describe in more detail below. The data payload in the decoded MsgA PUSCH transmission may include, for example, contention resolution information. After receiving and decoding MsgA, the gNB 104 may then send a second message (MsgB) back to the UE 106 which may include information similar to a RAR. For example, MsgB may include the same contention resolution information sent by the UE 106 to enable the UE to confirm that it is connected to the network.

In some embodiments, to relate a MsgA PRACH transmission with MsgA PUSCH transmission, each random access channel (RACH) occasion may be associated with a number of PUSCH resource sets. However, a number of preambles (e.g., up to 64 preambles in some implementations) may be transmitted in a RACH occasion. Thus, to distinguish between the preambles in a RACH occasion and their respective transmission in the PUSCH resource sets, a mapping may be implemented between the preambles and the PUSCH resource sets as described below.

In the embodiment illustrated in Fig. 2, the components and/or operations are exemplary only. Some embodiments may involve various additional components and/or operations not illustrated, for example, retry operations. Some embodiments may omit some components and/or operations. Moreover, in some embodiments, the arrangement of components and/or the temporal order of the operations may be varied.

Some embodiments according to this disclosure may implement various techniques to enable a UE to select resources to use for a PUSCH transmission to a gNB during a 2-step random access procedure, and to communicate the selection to the gNB so the gNB may know which resources to use to receive and/or decode the PUSCH transmission.

For example, in some embodiments, a collection of pre-defined PUSCH resource sets for a specific PUSCH configuration may be provided to a gNB and one or more UEs. A UE may then select one of the PUSCH resource sets to use for a MsgA PUSCH transmission during a 2-step random access procedure. In some embodiments, multiple PUSCH configurations may be used, wherein each configuration may have an associated collection of PUSCH resource sets. Multiple PUSCH configurations may be useful, for example, to enable a UE to prepare for a MsgA PUSCH transmission under different network conditions. In implementations with multiple PUSCH configurations, a UE may first determine which configuration to use, and then select a specific PUSCH resource set from the collection associated with the selected configuration. In some embodiments, the specific PUSCH resource set may be selected randomly from sets within the collection associated with the selected configuration.

Random access preambles within each preamble group may be mapped to specific PUSCH resource sets within each configuration using, for example, one-to-one and/or multiple-to-one mapping.

To enable a gNB to determine which set of PUSCH resources has been selected by a UE, some or all of the random access preambles may be divided into preamble groups. In some embodiments, one or more of the preamble groups may be mapped to one or more PUSCH configurations. For example, each group of preambles may be mapped to a corresponding one of the configurations available at the UE and gNB. Thus, when a UE selects a particular PUSCH configuration to use for a MsgA PUSCH transmission, the UE may consequently select a preamble for the MsgA PRACH transmission from the preamble group which corresponds to the selected PUSCH configuration.

In some embodiments, preamble groups may be divided, at least in part, based on the size of an expected or potential data payload for the MsgA PUSCH transmission. For example, preambles in a first group may be used for PUSCH transmissions having a payload size greater than a certain threshold value, and preambles in a second group may be used otherwise. In some embodiments, preamble groups may be divided, at least in part, based on channel conditions such as, for example, a path loss between the UE and gNB. In other embodiments, preamble groups may be divided based on a combination of these and/or any other factors.

A gNB may then determine which PUSCH configuration has been selected by the UE by detecting the preamble in the MsgA PRACH transmission and determining which group the preamble was selected from. In some embodiments, preambles may be divided into non-overlapping groups such that a gNB may uniquely determine the PUSCH configuration based on the MsgA PRACH preamble.

After determining the PUSCH configuration based on the preamble group, the gNB may then determine the specific set of PUSCH resources based on, for example, the one-to-one and/or multiple-to-one mapping used between the preambles within each preamble group and the specific PUSCH resource sets within each configuration.

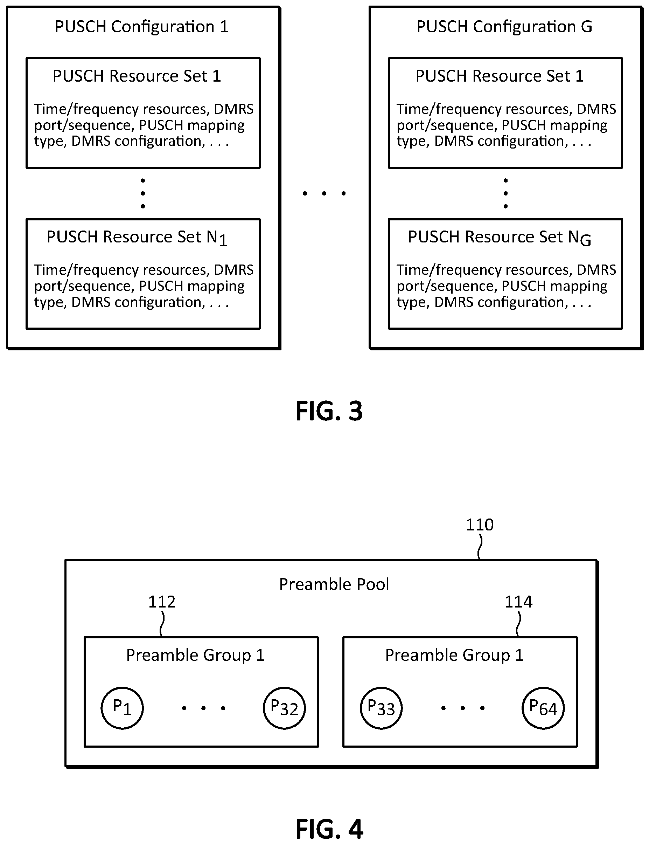

Fig. 3 illustrates an example embodiment of some PUSCH configurations and resource sets according to this disclosure. In the embodiment illustrated in Fig. 3, a UE may be configured with G different PUSCH configurations. G may be any number including 1, 2, 3, etc. The first configuration may include a number $N_1$ of different PUSCH resource sets, the second configuration may include a number $N_2$ of different PUSCH resource sets, and so on until the last configuration number $G$, which may include a number $N_G$ of different PUSCH resource sets. The PUSCH resource sets used for the MsgA PUSCH transmission may include, for example, any number of the following elements: time and/or frequency resources, demodulation reference signal (DMRS) resources such as DMRS ports and/or sequences, DMRS configuration, modulation coding scheme (MCS) selection, transport block size (TBS) selection, PUSCH mapping type, and/or the like. The examples shown in Fig. 3 are exemplary only, and other embodiments may not include any of the listed resources, or may include one or more resources not listed here.

In some embodiments, the PUSCH resource sets may be defined and/or constructed, for example, by a radio resource control layer (RRC) as part of a random access parameter and/or procedure initialization and/or configuration.

An example embodiment of a preamble grouping may be implemented as follows. A pool of preambles include of a total number $N_{tot}$ of preambles. Different preambles in the pool may be identified by label them with a preamble ID $p_i$ where $i \in \{1, ..., N_{tot}\}$. In an implementation with $G$ different PUSCH configurations, a collection of G non-overlapping groups of preambles may be selected from the pool. For a PUSCH configuration number $g$, a group of preambles may include $R_g$ distinct preambles, from which it may follow that

$$R_1 + R_2 + \cdots + R_G \leq N_{tot}. \qquad \text{(Eq. 1)}$$

For group $g$ of preambles, the set of $R_g$ preamble IDs in the group may be determined by $p_{f_g(i)}$ where $i \in \{1, ..., R_g\}$ and the mapping functions $f_g(i) \in \{1, ..., N_{tot}\}$. Since, in some embodiments, each group may include distinct preambles, and the groups of preambles may be non-overlapping, it may follow that

$$f_g(i) \neq f_k(j), \quad \forall g, k \in \{1, ..., G\}, \forall i \in \{1, .., R_G\}, \forall j \in \{1, ..., R_k\}. \qquad \text{(Eq. 2)}$$

In some embodiments, any set of functions $f_g(i)$ which satisfies the previous description may provide a valid preamble grouping.

Fig. 4 illustrates an example embodiment of a preamble pool divided into two groups according to this disclosure. In the example illustrated in Fig. 4, a preamble pool 110 may be divided into a first group (Preamble Group 1) 112 and a second group (Preamble Group 2) 114, where G = 2, $N_{tot}$ = 64, and $R_1 = R_2$ = 32. Thus, as illustrated in Fig. 4, an example of a valid mapping for preambles $p_{f_g}(i)$ may be given by:

$$f_1(i) = i, \qquad \forall i \in \{1, \ldots, 32\} \qquad \text{(Eq. 3)}$$

and

$$f_2(i) = i + 32, \qquad \forall i \in \{1, \ldots, 32\}. \qquad \text{(Eq. 4)}$$

The specific details illustrated in Fig. 4 are exemplary only. Other embodiments may include any number of preamble groups, and any number of preambles within each group, which need not be equal across groups.

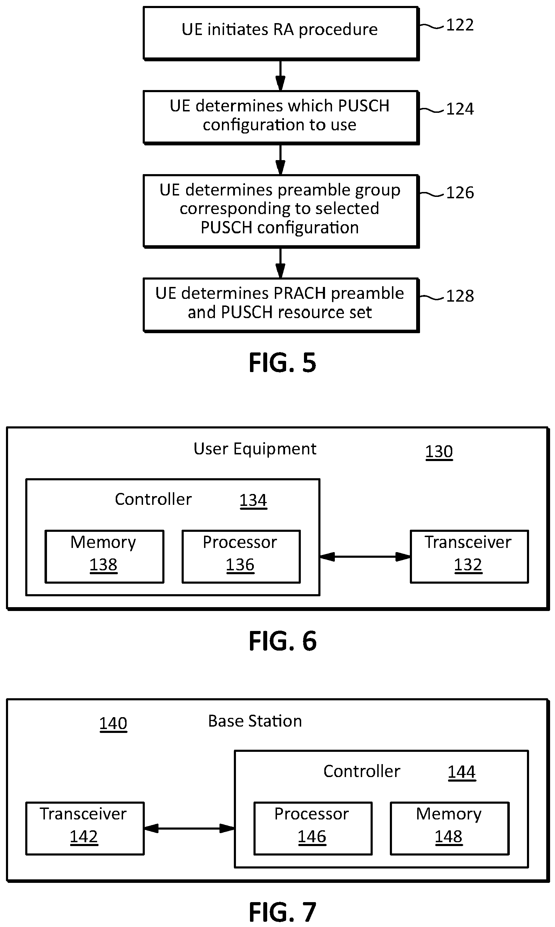

Fig. 5 illustrates an example embodiment of a method for selecting preamble and a set of PUSCH resources for a PUSCH transmission in a 2-step random access procedure according to this disclosure. The method may begin at task 122 where a UE may decide to initiate a random access procedure by sending a MsgA to a gNB. At task 124, the UE may determine which PUSCH configuration to use based on, for example, the network configuration, channel information and/or conditions, the potential size of MsgA PUSCH payload, and/or the like. After selecting a PUSCH configuration, the UE may determine, at task 126, a preamble group corresponding to the selected PUSCH configuration. At task 128, the UE may select a random access (PRACH) preamble from the selected preamble group to be used for a MsgA PRACH transmission to the gNB. Also at task 128, the UE may select a PUSCH resource set from the selected PUSCH configuration to be used for a MsgA PUSCH transmission to the gNB.

In the embodiments illustrated in Figs. 3-5, the illustrated components and/or operations are exemplary only. Some embodiments may involve various additional components and/or operations not illustrated, and some embodiments may omit some components and/or operations. Moreover, in some embodiments, arrangement of components and/or temporal order of the operations may be varied.

Fig. 6 illustrates an example embodiment of a UE according to this disclosure. The embodiment 130 illustrated in Fig. 6 may include a radio transceiver 132 and a controller 134 which may control the operation of the transceiver 132 and/or any other components in the UE 130. The UE 130 may be used, for example, to implement any of the UE functionality described in this disclosure such as UE random access functionality.

The transceiver 132 may transmit/receive one or more signals to/from a base station, and may include an interface unit for such transmissions/receptions. For example, the transceiver 132 may receive MIB/SIB information, random access related configuration information, and/or one or more synchronization signals from a base station. It may transmit one or more random access preambles, MsgA PRACH transmissions, MsgA PUSCH transmissions to a base station. It may receive responses thereto from the base station, for example, a MsgB transmission, RAR, and/or the like.

The controller 134 may include, for example, one or more processors 136 and a memory 138 which may store instructions for the one or more processors 136 to execute to implement any of the UE functionality described in this disclosure. For example, the controller 134 may be used to implement one or more decisions to select a preamble, a PUSCH configuration, and/or a set of PUSCH resources, and/or to implement various techniques to enable a UE to select resources to use for a PUSCH transmission to a gNB during a 2-step random access procedure, and to communicate the selection to the gNB so the gNB may know which resources to use to receive and/or decode the PUSCH transmission. In some embodiments, the controller 134 may be used to implement, may be implemented as, may include, and/or may be included as part of, a medium access control (MAC) layer.

Fig. 7 illustrates an example embodiment of a base station according to this disclosure. The embodiment 140 illustrated in Fig. 7 may include a radio transceiver 142 and a controller 144 which may control the operation of the transceiver 142 and/or any other components in the base station 140. The base station 140 may be used, for example, to implement any of the base station functionality described in this disclosure such as base station random access functionality.

The transceiver 142 may transmit/receive one or more signals to/from a base station, and may include an interface unit for such transmissions/receptions. For example, the transceiver 142 may transmit MIB/SIB information, random access related configuration information, and/or one or more synchronization signals to a UE. It may receive one or more random access preambles, MsgA PRACH transmissions, MsgA PUSCH transmissions and/or the like from a UE. It may transmit responses thereto to the UE, for example, a MsgB transmission, RAR, and/or the like.

The controller 144 may include, for example, one or more processors 146 and a memory 148 which may store instructions for the one or more processors 146 to execute to implement any of the base station functionality described in this disclosure. For example, the controller 144 may be used to implement one or more techniques to determine a PUSCH configuration, and/or a set of PUSCH resources selected by a UE during a 2-step random access procedure, and to receive and/or decode a MsgA PRACH transmission, MsgA PUSCH transmission and/or the like from a UE. In some embodiments, the controller 144 may be used to implement, may be implemented as, may include, and/or may be included as part of, a medium access control (MAC) layer.

Although some embodiments have been described in the context of 5G or new radio (NR) wireless networks, the principles may be applied to any other types of systems having random access procedures. Thus, in some embodiments, PUSCH may refer to any physical uplink shared channel, PRACH may refer to any physical random access channel, gNB may refer to any type of base station, etc.

The embodiments disclosed herein may be described in the context of various implementation details, but the principles of this disclosure are not limited these or any other specific details. Some functionality has been described as being implemented by certain components, but in other embodiments, the functionality may be distributed between different systems and components in different locations and having various user interfaces. Certain embodiments have been described as having specific processes, steps, combinations thereof, and/or the like, but these terms may also encompass embodiments in which a specific process, step, combinations thereof, and/or the like may be implemented with multiple processes, steps, combinations thereof, and/or the like, or in which multiple process, steps, combinations thereof, and/or the like may be integrated into a single process, step, combinations thereof, and/or the like. A reference to a component or element may refer to only a portion of the component or element. The use of terms such as "first" and "second" in this disclosure and the claims may only be for purposes of distinguishing the things they modify and may not indicate any spatial or temporal order unless apparent otherwise from context. A reference to a first thing may not imply the existence of a second thing. Moreover, the various details and embodiments described above may be combined to produce additional embodiments according to the inventive principles of this patent disclosure.

Since the inventive principles of this patent disclosure may be modified in arrangement and detail without departing from the inventive concepts, such changes and modifications are considered to fall within the scope of the following claims.

## Claims

1. A method for random access in a wireless communication network, the method comprising:

   selecting a first configuration or a second configuration for a first channel;
   selecting a preamble from a first preamble group corresponding to the first configuration or a second preamble group corresponding to the second configuration;
   transmitting the selected preamble from a user equipment (UE) through a second channel; and
   transmitting a payload from the UE through the first channel using the selected configuration;
   wherein the selected configuration and the selected preamble are determined by the UE.

2. The method of claim 1, wherein:

   the first channel comprises a physical uplink shared channel (PUSCH); and
   the second channel comprises a physical random access channel (PRACH).

3. The method of claim 2, wherein:

   one or more preambles in the first preamble group is mapped to one or more sets of PUSCH resources in the first configuration;
   one or more preambles in the second preamble group is mapped to one or more sets of PUSCH resources in the second configuration; and
   the UE transmits the payload using the set of PUSCH resources mapped to the selected preamble.

4. The method of claim 1, wherein the UE selects the configuration based on one or more channel conditions.

5. The method of claim 1, wherein the UE selects the configuration based on a potential length of the payload.

6. The method of claim 1, wherein the payload comprises contention resolution information.

7. The method of claim 3, wherein the preambles are mapped to the sets of PUSCH resources on a one-to-one basis.

8. The method of claim 3, wherein the preambles are mapped to the sets of PUSCH resources on a multiple-to-one basis.

9. The method of claim 1, wherein the first preamble group is non-overlapping with the second preamble group.

10. The method of claim 2, further comprising:

receiving the selected preamble through the PRACH at a base station;
determining the selected configuration for the PUSCH based on the selected preamble at the base station; and
receiving the payload through the PUSCH at the base station using the selected configuration.

11. The method of claim 3, further comprising:

receiving the selected preamble through the PRACH at a base station;
determining the set of PUSCH resources mapped to the selected preamble at the base station; and
receiving the payload through the PUSCH at the base station using the set of PUSCH resources mapped to the selected preamble.

12. A user equipment (UE) for a wireless communication network, the UE comprising:
a controller configured to:

select a first configuration or a second configuration for a first channel;
select a random access preamble from a first preamble group corresponding to the first configuration or a second preamble group corresponding to the second configuration;
transmit the selected preamble from the UE through a second channel; and
transmit a payload from the UE through the first channel using the selected configuration;
wherein the selected configuration and the selected preamble are determined by the controller.

13. The user equipment of claim 12, wherein:

the first channel comprises a physical uplink shared channel (PUSCH); and
the second channel comprises a physical random access channel (PRACH).

14. The user equipment of claim 13, wherein:

one or more preambles in the first preamble group is mapped to one or more sets of PUSCH resources in the first configuration;
one or more preambles in the second preamble group is mapped to one or more sets of PUSCH resources in the second configuration; and
the controller is configured to transmit the payload using the set of PUSCH resources mapped to the selected preamble.

15. The user equipment of claim 12, wherein the controller is configured to select the configuration based on at least one of a channel condition or a potential length of the payload.

16. The user equipment of claim 13, wherein the preambles are mapped to the sets of PUSCH resources on a one-to-one basis.

17. The user equipment of claim 13, wherein the preambles are mapped to the sets of PUSCH resources on a multiple-to-one basis.

18. The user equipment of claim 12, further comprising a transceiver coupled to the controller.

19. A base station for a wireless communication network, the base station comprising:
a controller configured to:

receive a random access preamble from a user equipment (UE) through a first channel;
determine a configuration for a second channel selected by the UE based on a preamble group to which the random access preamble belongs; and
receive a random access payload through the second channel using the determined configuration.

**20.** The base station of claim 19, wherein:

the first channel comprises a physical random access channel (PRACH); and
the second channel comprises a physical uplink shared channel (PUSCH).

**21.** The base station of claim 20, wherein the controller is configured to:

determine a set of PUSCH resources mapped to the random access preamble; and
receive the random access payload through the PUSCH at the base station using the determined set of PUSCH resources.

**22.** The base station of claim 19, wherein the controller is configured to transmit a random access response to the UE in response to the random access preamble and the random access payload.

**23.** The base station of claim 19, further comprising a transceiver coupled to the controller.

FIG. 1

FIG. 2

PUSCH Configuration 1

PUSCH Resource Set 1

Time/frequency resources, DMRS port/sequence, PUSCH mapping type, DMRS configuration, . . .

PUSCH Resource Set N₁

Time/frequency resources, DMRS port/sequence, PUSCH mapping type, DMRS configuration, . . .

· · ·

PUSCH Configuration G

PUSCH Resource Set 1

Time/frequency resources, DMRS port/sequence, PUSCH mapping type, DMRS configuration, . . .

PUSCH Resource Set N_G

Time/frequency resources, DMRS port/sequence, PUSCH mapping type, DMRS configuration, . . .

## FIG. 3

110

Preamble Pool

112

114

Preamble Group 1

$P_1$ · · · $P_{32}$

Preamble Group 1

$P_{33}$ · · · $P_{64}$

## FIG. 4

```
┌─────────────────────────────────┐
│    UE initiates RA procedure    │──── 122
└─────────────────────────────────┘
                 │
                 ▼
┌─────────────────────────────────┐
│   UE determines which PUSCH     │──── 124
│       configuration to use      │
└─────────────────────────────────┘
                 │
                 ▼
┌─────────────────────────────────┐
│   UE determines preamble group  │──── 126
│     corresponding to selected   │
│        PUSCH configuration      │
└─────────────────────────────────┘
                 │
                 ▼
┌─────────────────────────────────┐
│   UE determines PRACH preamble  │──── 128
│      and PUSCH resource set     │
└─────────────────────────────────┘
```

**FIG. 5**

```
┌───────────────────────────────────────────────────────────────────┐
│  User Equipment                                    130              │
│   ┌─────────────────────────────────────────┐                      │
│   │  Controller              134            │                      │
│   │  ┌──────────────┐  ┌──────────────┐     │    ┌──────────────┐   │
│   │  │   Memory     │  │  Processor   │     │◄──►│ Transceiver  │   │
│   │  │    138       │  │    136       │     │    │    132       │   │
│   │  └──────────────┘  └──────────────┘     │    └──────────────┘   │
│   └─────────────────────────────────────────┘                      │
└───────────────────────────────────────────────────────────────────┘
```

**FIG. 6**

```
┌───────────────────────────────────────────────────────────────────┐
│    140              Base Station                                   │
│                          ┌─────────────────────────────────────┐   │
│                          │  Controller            144          │   │
│  ┌──────────────┐        │  ┌──────────────┐  ┌──────────────┐ │   │
│  │ Transceiver  │◄──────►│  │  Processor   │  │   Memory     │ │   │
│  │    142       │        │  │    146       │  │    148       │ │   │
│  └──────────────┘        │  └──────────────┘  └──────────────┘ │   │
│                          └─────────────────────────────────────┘   │
└───────────────────────────────────────────────────────────────────┘
```

**FIG. 7**

Europäisches
Patentamt

European
Patent Office

Office européen
des brevets

# EUROPEAN SEARCH REPORT

Application Number

EP 20 17 8867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LG ELECTRONICS: "Discussion on preamble selection for 2-step RACH", 3GPP DRAFT; R1-1904198 LG_DISCUSSION ON PREAMBLE SELECTION FOR 2-STEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Xian, China; 20190408 - 20190412 7 April 2019 (2019-04-07), XP051699530, Retrieved from the Internet: URL:http://www.3gpp.org/ftp/Meetings%5F3GP P%5FSYNC/RAN1/Docs/R1%2D1904198%2Ezip [retrieved on 2019-04-07] | 1-5, 9-15, 18-21,23 | INV. H04W74/08 |
| Y | * section 2 * | 6-8,16, 17,22 | |
| Y | CATT: "2-step RACH procedure", 3GPP DRAFT; R2-1905753 - 2-STEP RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20190513 - 20190517 13 May 2019 (2019-05-13), XP051729252, Retrieved from the Internet: URL:http://www.3gpp.org/ftp/Meetings%5F3GP P%5FSYNC/RAN2/Docs/R2%2D1905753%2Ezip [retrieved on 2019-05-13] * section 2 * | 7,8,16, 17,22 | |

TECHNICAL FIELDS
SEARCHED (IPC)

H04W

-----

-----

-/--

The present search report has been drawn up for all claims

| Place of search | Date of completion of the search | Examiner |
|---|---|---|
| The Hague | 5 October 2020 | Saffell, Christine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 20 17 8867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VIVO: "Considerations on the 2-step RACH procedure", 3GPP DRAFT; R2-1903077 CONSIDERATIONS ON THE 2-STEP RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Xi'an, China; 20190408 - 20190412 6 April 2019 (2019-04-06), XP051700434, Retrieved from the Internet: URL:http://www.3gpp.org/ftp/Meetings%5F3GP P%5FSYNC/RAN2/Docs/R2%2D1903077%2Ezip [retrieved on 2019-04-06] * sections 1, 2.2.1, 2.2.2, 2.2.4, 2.3.1 * ----- | 6,22 | |
| A | LG ELECTRONICS INC: "Criteria for 2-step RACH selection", 3GPP DRAFT; R2-1906580 CRITERIA FOR 2-STEP RACH SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20190513 - 20190517 13 May 2019 (2019-05-13), XP051730041, Retrieved from the Internet: URL:http://www.3gpp.org/ftp/Meetings%5F3GP P%5FSYNC/RAN2/Docs/R2%2D1906580%2Ezip [retrieved on 2019-05-13] * the whole document * ----- | 1-23 | TECHNICAL FIELDS SEARCHED (IPC) |

The present search report has been drawn up for all claims

| Place of search | Date of completion of the search | Examiner |
|---|---|---|
| The Hague | 5 October 2020 | Saffell, Christine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 771 284 A1**

## REFERENCES CITED IN THE DESCRIPTION

**Patent documents cited in the description**

- US 62878102